# EUROPÄISCHE PATENTSCHRIFT

(11) **EP 2 411 243 B1**
(45) Veröffentlichungstag und Bekanntmachung des Hinweises auf die Patenterteilung: **14.09.2016**
(21) Anmeldenummer: 10716281.0
(22) Anmeldetag: 26.03.2010
(51) Int. Cl.: B60N 2/46

(54) **PASSAGIERSITZARMLEHNENEINHEIT**
ARMREST UNIT FOR A PASSENGER SEAT
UNITÉ D'ACCOUDOIR DE SIÈGE DE PASSAGER

(30) Priorität: 27.03.2009 DE 102009014750
(43) Veröffentlichungstag der Anmeldung: 01.02.2012
(73) Patentinhaber: Recaro Aircraft Seating GmbH & Co. KG, 74523 Schwäbisch Hall (DE)
(72) Erfinder: WIELAND, Klaus, 74523 Bibersfeld (DE); SOMMER, Bernd, 74523 Schwäbisch Hall (DE)
(74) Vertreter: Daub, Thomas
(86) Internationale Anmeldenummer: PCT/EP2010/001912
(87) Internationale Veröffentlichungsnummer: WO 2010/108690

(56) Entgegenhaltungen:
- EP-A1- 0 669 221
- EP-A2- 0 187 346
- DE-A1- 1 949 303
- DE-A1-102005 006 977
- DE-U1- 20 207 285
- JP-A- 2005 073 786
- US-A- 5 009 468
- US-B1- 7 862 122

## Beschreibung

### Stand der Technik

Die Erfindung geht aus von einer Passagiersitzarmlehneneinheit mit einem Armlehnengrundkörper, der eine Armlehnenfläche bildet.

Es ist bereits ein Passagiersitz mit einer Armlehne bekannt. Diese weist einen Armlehnengrundkörper auf, der eine Armlehnenfläche zur Stützung eines Arms eines sitzenden Passagiers bildet. Der Armlehnengrundkörper besteht aus einem Material, das eine an einen Verschleißschutz angepasste Härte aufweist.

Eine Passagiersitzarmlehneneinheit entsprechend dem Oberbegriff des Anspruchs 1 ist aus der US5009468 bekannt.

Der Erfindung liegt die Aufgabe zugrunde, eine gattungsgemäße Passagiersitzarmlehneneinheit bereitzustellen, die einen hohen Komfort für einen Passagier und dennoch einen vorteilhaften Verschleißschutz bietet.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Passagiersitzarmlehneneinheit mit einem Armlehnengrundkörper, der eine Armlehnenfläche bildet.

Es wird vorgeschlagen, dass die Passagiersitzarmlehneneinheit eine unterhalb der Armlehnenfläche angeordnete Federungseinheit umfasst, die zumindest ein Abstandsmittel aufweist. Hierdurch kann der Komfort für einen sitzenden Passagier erhöht werden, wobei ein an einen Verschleißschutz angepasstes Material für die Herstellung des Armlehnengrundkörpers beibehalten werden kann.

Die Armlehnenfläche bildet in einer Gebrauchsstellung vorteilhafterweise eine Stütze für einen Arm eines Passagiers bei einer ordnungsgemäßen Benutzung eines Passagiersitzes und ist hierbei zur Aufnahme von Stützkräften vorgesehen, die relativ zu einem Boden, auf welchem der Passagiersitz aufgeständert ist, überwiegend vertikal ausgerichtet sind. In zumindest einer Gebrauchsstellung einer Armlehne, in welcher die Passagiersitzarmlehneneinheit integriert ist, ist die Armlehnenfläche relativ zum Boden zumindest im Wesentlichen horizontal ausgerichtet. An die Armlehnenfläche schließen sich vorzugsweise Seitenflächen an, die bezüglich einer Vertikalrichtung senkrecht zum Boden und ausgehend von der Armlehnenfläche nach unten geneigt, ggf. vertikal angeordnet sind, wobei die Armlehnenfläche einer Hauptfläche des Armlehnengrundkörpers, d.h. einem überwiegenden Teil der gesamten, vom Armlehnengrundkörper gebildeten Außenfläche entspricht.

Der Begriff "unterhalb" bezieht sich hierbei auf die Normalrichtung der Armlehnenfläche. Die Armlehnenfläche stellt den "obersten" Bereich der Passagiersitzarmlehneneinheit dar, wobei eine der Normalrichtung entgegengesetzte Richtung "nach unten" zeigt. In einer Gebrauchsstellung der Armlehnenfläche ist die Normalrichtung zur Armlehnenfläche relativ zum Boden, vorzugsweise zumindest im Wesentlichen vertikal ausgerichtet. Die Kräfte, die die Armlehnenfläche bei ihrer Benutzung in einer Gebrauchsstellung belasten, sind typischerweise überwiegend entgegen der Normalrichtung gerichtet. Durch eine Anordnung der Federungseinheit unterhalb der Armlehnenfläche kann demnach der Komfort für einen Passagier erhöht werden, indem die Armlehnenfläche eine erhöhte Nachgiebigkeit in einer der Normalrichtung entgegengesetzten Richtung aufweist.

Es soll unter einem "Abstandsmittel" insbesondere ein Mittel verstanden werden, welches zur Bildung eines Abstands zwischen zwei Bauteilen sich auf von den Bauteilen gebildete, einander gegenüberliegende Stützflächen abstützt, wobei dem Abstandsmittel, im Gegensatz zu einem kontinuierlichen Füllmaterial, welches einen durch den Abstand gebildeten Raum lediglich ausfüllt, in zumindest einer Richtung zumindest ein diskreter Stützbereich wenigstens einer der Stützflächen zugeordnet ist. Unter einem "Stützbereich" soll insbesondere ein Bereich der Stützfläche verstanden werden, in welchem das Abstandsmittel an die Stützfläche angrenzt. Unter einem "diskreten Stützbereich einer Stützfläche in zumindest einer Richtung" soll insbesondere verstanden werden, dass der Stützbereich in dieser Richtung eine Erstreckung aufweist, die maximal einem Bruchteil der maximalen Erstreckung der Stützfläche in dieser Richtung entspricht. Insbesondere entspricht die Erstreckung des diskreten Stützbereichs maximal einem Fünftel, vorteilhaft maximal einem Zehntel der gesamten Erstreckung der Stützfläche in der betreffenden Richtung. Besonders vorteilhaft kann ein Stabilitätsgefühl einem Passagier bei der Abstützung eines Arms auf der Armlehnenfläche vermittelt werden, wenn die Federungseinheit eine Mehrzahl von Abstandsmitteln aufweist. Hierbei sind die Abstandsmittel, anders als bei einem kontinuierlichen Füllmaterial, voneinander unterscheidbar. Hierbei weist eine entsprechende Stützfläche zur Abstützung der Abstandsmittel eine Mehrzahl von diskreten Stützbereichen auf, die in zumindest einer Richtung voneinander beabstandet sind. Die Passagiersitzarmlehneneinheit weist erfindungsgemäß ein Stützmittel zur Stützung der Federungseinheit auf, wobei das Abstandsmittel in Normalrichtung der Armlehnenfläche einen Abstand zwischen dem Stützmittel und zumindest einem Teilbereich des Armlehnengrundkörpers bildet. Das Stützmittel bildet vorzugsweise eine Stützfläche aus, die im montierten Zustand dem Armlehnengrundkörper zugewandt ist. Insbesondere ist die Stützfläche von der Armlehnenfläche bezüglich der Normalrichtung bedeckt, vorteilhafterweise kann sie zur Armlehnenfläche parallel ausgerichtet sein.

Ferner können eine kompakte Bauweise und eine vorteilhafte Federung erreicht werden, wenn sich die Federungseinheit an zumindest einem Teilbereich des Armlehnengrundkörpers direkt abstützt.

Erfindungsgemäß kann eine hohe Nachgiebigkeit bei einem niedrigen Gewicht erreicht werden, wenn die Passagiersitzarmlehneneinheit ein Stützmittel zur Stützung der Federungseinheit aufweist, wobei durch die Federungseinheit zumindest ein Hohlraum zwischen zumindest einem Teilbereich des Armlehnengrundkörpers und dem Stützmittel gebildet ist. Hierbei soll unter einem "Hohlraum" insbesondere ein Raum verstanden werden, der frei von Material ist. Besonders vorteilhaft kann der Hohlraum als Luftpolster ausgebildet sein.

In diesem Zusammenhang wird vorgeschlagen, dass die Federungseinheit zumindest zwei Hohlräume bildet und ein Trennmittel aufweist, das die Hohlräume voneinander trennt, wodurch eine hohe Nachgiebigkeit in differenzierten Regionen des Armlehnengrundkörpers erreicht werden kann. Typischerweise ist eine Nachgiebigkeit eines herkömmlichen Armlehnengrundkörpers besonders im Bereich seiner Seitenflächen gering. Hierbei kann erfindungsgemäß eine erhöhte Flexibilität des Armlehnengrundkörpers in zumindest einem seitlichen Bereich erreicht werden, wenn der Armlehnengrundkörper länglich mit einer Längsrichtung ausgebildet ist und eine sich in Längsrichtung erstreckende Mittelebene aufweist, wobei der Hohlraum seitlich der Mittelebene und von der Mittelebene beabstandet angeordnet ist. Hierdurch kann einfach eine vorteilhafte Anordnung erreicht werden, in welcher der Hohlraum an einem Seitenbereich des Armlehnengrundkörpers, d.h. einem eine Seitenfläche des Armlehnengrundkörpers bildenden Bereich angrenzt. Unter einem Hohlraum, der "von der Mittelebene beabstandet ist", soll insbesondere verstanden werden, dass eine den Hohlraum begrenzende, der Mittelebene zugewandte Grenze von der Mittelebene beabstandet ist, und zwar insbesondere in einer Richtung quer zur Mittelebene. Die Längsrichtung entspricht vorzugsweise der Sitzrichtung bzw. der Transportrichtung, wie z.B. einer Flugrichtung. In einer konstruktiv einfachen und materialsparenden Ausführung weist das Trennmittel zumindest zwei Trennglieder auf, die beidseitig der Mittelebene angeordnet sind. Unter der "Mittelebene" des Armlehnengrundkörpers soll insbesondere eine Ebene verstanden werden, die senkrecht zur Armlehnenfläche und parallel zur Längsrichtung ausgerichtet ist und die den Massenmittelpunkt des Armlehnengrundkörpers einschließt

Ferner wird vorgeschlagen, dass zwei Hohlräume beidseitig der Mittelebene und von der Mittelebene beabstandet angeordnet sind. Hierdurch kann einfach eine vorteilhafte Anordnung erreicht werden, in welcher die Hohlräume an Seitenbereichen des Armlehnengrundkörpers angrenzen, die bezüglich der Mittelebene einander gegenüberliegen. Außerdem kann vorteilhaft eine kompakte Bauweise erreicht werden, wenn der Armlehnengrundkörper das Stützmittel zumindest im Wesentlichen umschließt. Hierbei ist das Stützmittel vom Armlehnengrundkörper "zumindest im Wesentlichen umschlossen", wenn zumindest drei, insbesondere vier aneinander angrenzende Seiten des Stützmittels in den jeweiligen Normalrichtungen der Seiten vom Armlehnengrundkörper bedeckt bzw. überlappt sind. Besonders vorteilhaft kann hierbei der Armlehnengrundkörper direkt an das Stützmittel angrenzen.

Es können mit Vorteil Bauteile zur Halterung des Armlehnengrundkörpers und/oder des Stützmittels eingespart werden, wenn der Armlehnengrundkörper zumindest einen Haltebereich aufweist, der zur Herstellung einer Halteverbindung mit dem Stützmittel vorgesehen ist. Insbesondere können hierbei der Armlehnengrundkörper und das Stützmittel aneinander angepasste bzw. komplementäre Formen aufweisen. Eine besonders einfache Montage kann in diesem Zusammenhang erreicht werden, wenn der Haltebereich zur Herstellung eines Formschlusses mit dem Stützmittel vorgesehen ist.

Erfindungsgemäß wird vorgeschlagen, dass die Federungseinheit ein Federungsteil mit zumindest einem Teilbereich aufweist, der relativ zum Stützmittel schräg ausgerichtet ist, wodurch eine hohe Flexibilität der Federungseinheit erreicht werden kann, insbesondere wenn Kräfte durch das Abstützen eines Arms auf der Armlehnenfläche diese in Richtung auf das Stützmittel belasten. Es sollte unter einem Teilbereich, der relativ zum Stützmittel "schräg" ausgerichtet ist, ein Teilbereich verstanden werden, der zumindest eine Erstreckungsrichtung aufweist, insbesondere eine Erstreckungsrichtung in einer Ebene senkrecht zur Längsrichtung des Armlehnengrundkörpers, die einen spitzen Winkel mit einer vom Stützmittel gebildeten Stützfläche bildet. Insbesondere kann der Teilbereich an das Stützmittel schräg angrenzen. An den relativ zum Stützmittel schräg ausgerichteten Teilbereich kann sich ein weiterer Teilbereich anschließen, der mit dem schrägen Teilbereich eine Biegestelle bildet.

Ferner wird vorgeschlagen, dass der Armlehnengrundkörper länglich mit einer Längsrichtung ausgebildet ist und die Federungseinheit ein Federungsteil umfasst, das in der Längsrichtung eine Erstreckung aufweist, die zumindest einen wesentlichen Teil der Erstreckung des Armlehnengrundkörpers in Längsrichtung beträgt, wobei eine zumindest im Wesentlichen uniforme Federung der Armlehnenfläche in deren Längsrichtung und dadurch ein für den Passagier angenehmes haptisches Gefühl bei einer Abstützung auf der Armlehnenfläche erreicht werden können. Unter einem "wesentlichen Teil" der Erstreckung soll insbesondere zumindest 50%, vorzugsweise zumindest 70% und besonders vorteilhaft zumindest 80% der gesamten Erstreckung des Armlehnengrundkörpers in dessen Längsrichtung verstanden werden.

Eine einfache Herstellung der Federungseinheit und eine einfache Montage der Passagiersitzarmlehneneinheit können erreicht werden, wenn die Federungseinheit zumindest ein Federungsteil aufweist, das an den Armlehnengrundkörper einstückig angeformt ist.

Es kann ferner eine konstruktiv einfache Ausführung erreicht werden, wenn die Federungseinheit zumindest ein Federungsteil aufweist, das einen von einem Teilbereich des Armlehnengrundkörpers hervorstehenden Bereich aufweist, wobei eine besonders vorteilhafte, insbesondere direkte Abstützung des Armlehnengrundkörpers durch die Federungseinheit erreicht werden kann. In dieser Ausführung kann der hervorstehende Bereich einfach als Abstandsmittel und/oder Trennmittel dienen.

Ferner kann eine flexible und dennoch stabile Abstützung des Armlehnengrundkörpers erreicht werden, wenn der Armlehnengrundkörper länglich mit einer Längsrichtung ausgebildet ist und die Federungseinheit zumindest zwei zueinander parallel, in der Längsrichtung ausgerichtete Bereiche aufweist, die von einem Teilbereich des Armlehnengrundkörpers hervorstehen. Insbesondere kann ein Paar von Abschnitten beidseitig einer sich in Längsrichtung erstreckenden Mittelebene des Armlehnengrundkörpers angeordnet sein. Durch eine entsprechende Ausgestaltung können ferner mehrere, voneinander getrennte und/oder beabstandete Hohlräume unterhalb der Armlehnenfläche auf eine besonders konstruktiv einfache Weise gebildet werden. Um eine hohe Flexibilität zu erreichen, können in einem Paar von parallelen Abschnitten die Abschnitte relativ zum Stützmittel und/oder relativ zueinander schräg ausgerichtet sein.

In einer weiteren Ausführung der Erfindung wird vorgeschlagen, dass die Federungseinheit ein Federmittel aufweist, das zumindest aus Stoff hergestellt ist, wodurch eine leichte Bauweise erreicht werden kann.

Insbesondere wird vorgeschlagen, dass das Federmittel als Abstandsgewirke ausgebildet ist, wodurch eine besonders vorteilhafte Federung mit einer über eine große Fläche homogenen Flexibilität erreicht werden kann. Unter einem "Abstandsgewirke" soll insbesondere ein Paar von Textilflächen, die voneinander mittels eines Satzes von Abstandsmitteln, insbesondere unter der Form von Verbindungsfäden, die die einander gegenüberliegenden Textilflächen verbinden, auf Distanz gehalten werden. Mittels eines Abstandsgewirkes kann insbesondere eine hohe Dichte an Abstandsmitteln erreicht werden, wodurch eine besonders homogene Federung der Armlehnenfläche erreicht werden kann, insbesondere wenn das Abstandsgewirke eine Fläche aufspannt, die zumindest im Wesentlichen, d.h. insbesondere zumindest 50%, vorteilhaft zumindest 70% und bevorzugt zumindest 80% der Armlehnenfläche entspricht.

In einer bevorzugten Ausführung der Erfindung wird vorgeschlagen, dass der Armlehnengrundkörper aus einem harten Material hergestellt ist, wodurch ein besonders hoher Schutz gegen einen Verschleiß der Armlehnenfläche erreicht werden kann. Unter einem "harten Material" soll insbesondere ein Material verstanden werden, das eine Härte aufweist, die insbesondere größer als 50 Shore A, besonders vorteilhaft größer als 70 Shore A ist.

### Zeichnung

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines Passagiersitzes mit Armlehneneinheiten,
- Fig. 2: eine Armlehneneinheit aus Figur 1 mit einem eine Armlehnenfläche bildenden Grundkörper, einem Stützmittel und einer zwischen diesen angeordneten Federungseinheit mit Abstandsmitteln,
- Fig. 3: eine Explosionsdarstelllung der Armlehneneinheit,
- Fig. 4: eine weitere Explosionsdarstellung der Armlehneneinheit,
- Fig. 5: eine Schnittansicht der Armlehneneinheit aus Figur 2,
- Fig. 6: eine alternative Armlehneneinheit mit einem Abstandsgewirke und
- Fig. 7: eine Schnittansicht der Armlehneneinheit aus Figur 6.

### Beschreibung der Ausführungsbeispiele

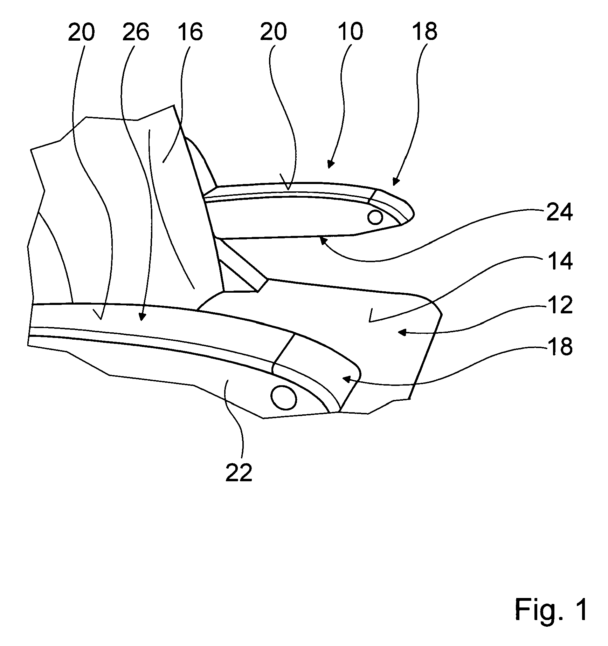

Figur 1 zeigt einen als Fluggastsitz ausgebildeten Passagiersitz 10 in einer perspektivischen Darstellung. Dieser weist ein Sitzteil 12, das eine Sitzfläche 14 bildet, und eine Rückenlehne 16 auf. Beidseitig der Rückenlehne 16 sind zwei Armlehnen 18 angeordnet, die jeweils eine Armlehnenfläche 20 aufweisen, welche zu einem Abstützen eines Arms eines im Passagiersitz 10 sitzenden Passagiers vorgesehen ist. Die Armlehnen 18 können mit einer Sitzstruktur starr verbunden sein oder sie können an der Sitzstruktur schwenkbar gelagert sein. In einer in Figur 1 gezeigten Horizontalstellung der Armlehnen 18 ist die entsprechende Armlehnenfläche 20 im Wesentlichen parallel zur Sitzfläche 14 bzw. zu einem Boden ausgerichtet, auf welchem der Passagiersitz 10 mittels einer nicht näher gezeigten Aufständereinheit aufgeständert ist.

Die Armlehnen 20 weisen jeweils einen Schalenkörper 22 auf, welcher eine der Sitzfläche 14 zugewandte, der Armlehnenfläche 20 gegenüberliegende Bodenseite 24 bildet. Im oberen, der Bodenseite 24 abgewandten Bereich des Schalenkörpers 22 ist jeweils eine Passagiersitzarmlehneneinheit 26 aufgenommen, die anhand der nächsten Figuren näher beschrieben ist.

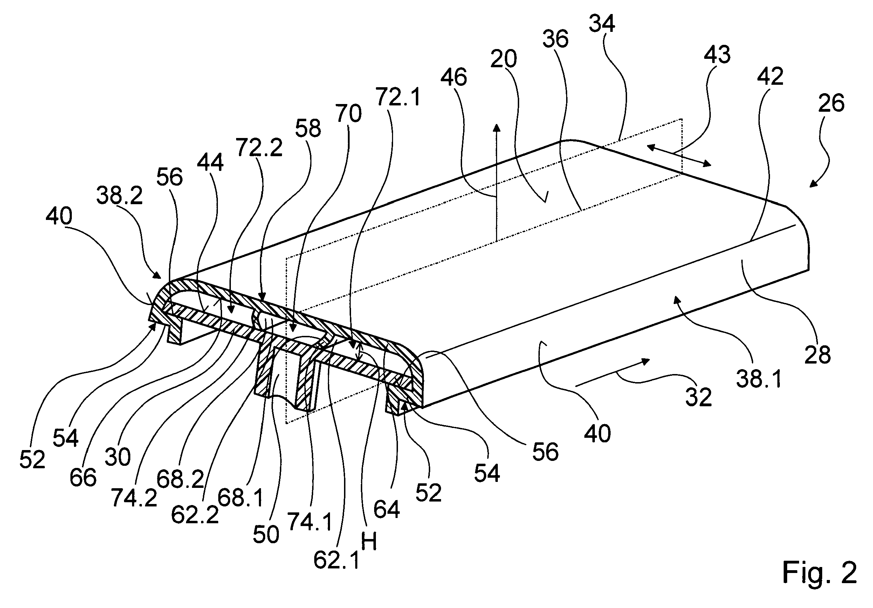

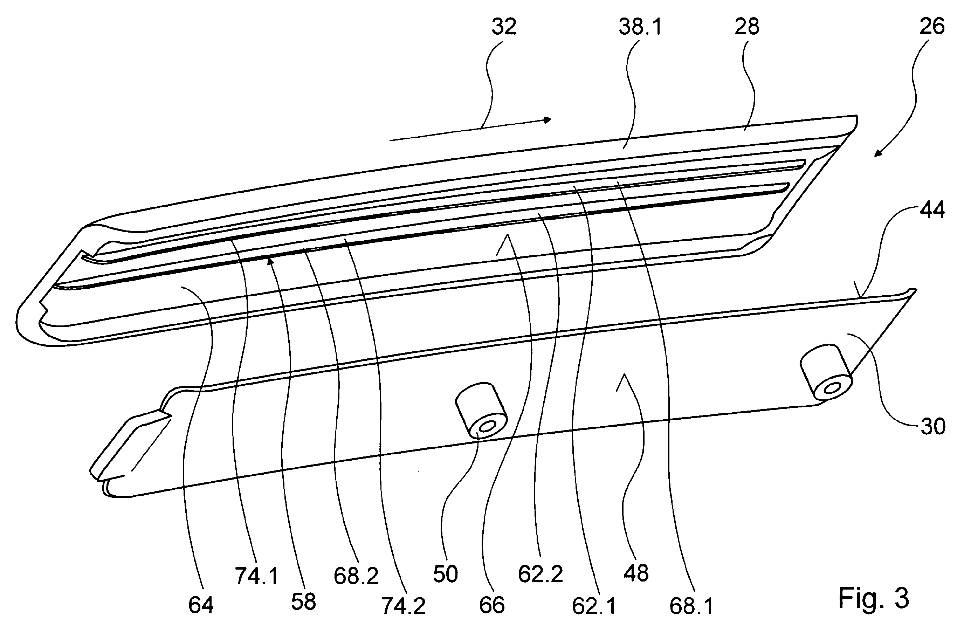

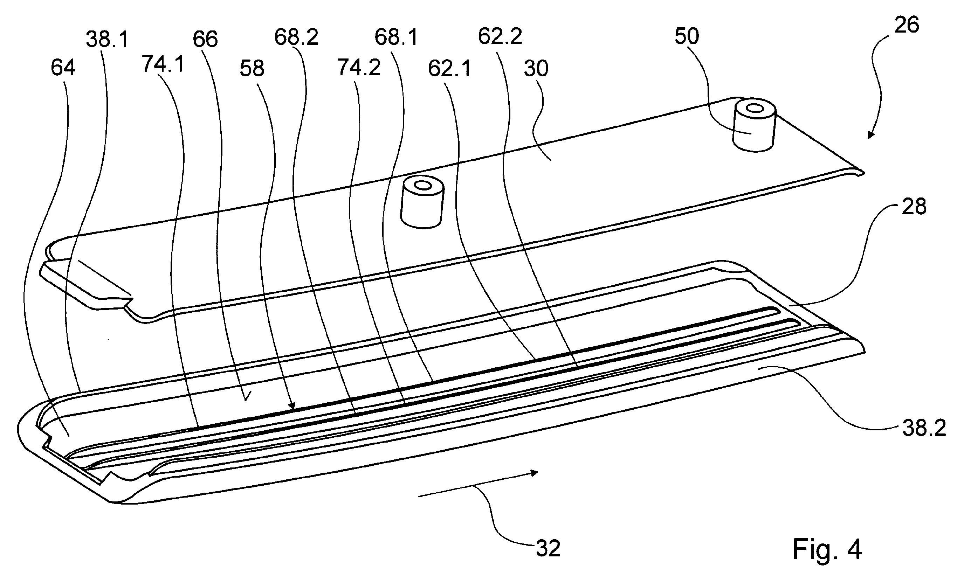

Figur 2 zeigt eine dreidimensionale Schnittansicht einer Passagiersitzarmlehneneinheit 26 aus Figur 1. Die folgende Beschreibung verweist auch auf die Figuren 3 und 4, die jeweils die Passagiersitzarmlehneneinheit 26 in einer Explosionsdarstellung zeigen. Wie den Figuren 3 und 4 entnommen werden kann, weist die Passagiersitzarmlehneneinheit 26 einen Armlehnengrundkörper 28 und ein weiteres Bauteil auf, das als Stützmittel 30 bezeichnet ist und weiter unten beschrieben wird.

Bezug nehmend auf Figur 2 weist der Armlehnengrundkörper 28 eine Hauptfläche auf, die im eingebauten Zustand der Armlehnenfläche 20 entspricht. Der Armlehnengrundkörper 28 ist als ein längliches Bauteil ausgebildet, welches eine Haupterstreckungsrichtung bzw. eine Längsrichtung 32 aufweist, die im eingebauten Zustand im Passagiersitz 10 der Sitzrichtung bzw. der Transportrichtung, beispielsweise einer Flugrichtung, entspricht. Ferner kann der Armlehnengrundkörper 28 gedanklich in zwei Halbteile geteilt werden, die bezüglich einer Mittelebene 34, die parallel zur Längsrichtung 32 und senkrecht zur Armlehnenfläche 20 ausgerichtet ist, zueinander spiegelsymmetrisch sind. Die Spur der Mittelebene 34 auf der Armlehnenfläche 20 entspricht einer Mittelachse 36 des Armlehnengrundkörpers 28. Der Armlehnengrundkörper 28 weist ferner zwei Seitenbereiche 38.1, 38.2 auf, die jeweils eine Seitenfläche 40 bilden, welche sich über einen Kantenbereich 42, insbesondere einen abgerundeten Kantenbereich 42, an die Hauptfläche bzw. die Armlehnenfläche 20 anschließt. Insbesondere schließt sich die Seitenfläche 40 einstückig an die Armlehnenfläche 20 an. Die Seitenflächen 40 sind parallel zur Längsrichtung 32 ausgerichtet und in einer Richtung 43 senkrecht zur Längsrichtung 32 einander gegenüberliegend angeordnet.

Das Stützmittel 30 ist als ein plattenförmiger Körper ausgebildet (siehe Figuren 3 und 4). Es ist ebenfalls als ein längliches Bauteil ausgebildet, das eine Längsrichtung besitzt, die im eingebauten Zustand der Passagiersitzarmlehneneinheit 26 der Längsrichtung 32 des Armlehnengrundkörpers 28 entspricht. Das Stützmittel 30 weist eine Stützfläche 44 auf, die im eingebauten Zustand der Armlehnenfläche 20 zugewandt ist. Die Stützfläche 44 ist hierbei im Wesentlichen parallel zur Armlehnenfläche 20 ausgerichtet und weist eine Flächenerstreckung auf, die zumindest der Flächenerstreckung der Armlehnenfläche 20 entspricht. Bezüglich der Normalrichtung 46 der Armlehnenfläche 20 ist die Stützfläche 44 des Stützmittels 30 vom Armlehnengrundkörper 28 von oben bedeckt. Das Stützmittel 30 weist ferner eine Bodenfläche 48 auf, die im eingebauten Zustand dem Schalenkörper 22 zugewandt ist und an welche Befestigungsmittel 50 zur Befestigung der Passagiersitzarmlehneneinheit an weiteren Teilen der Armlehne 18 angeformt sind. Im betrachteten Ausführungsbeispiel sind die Befestigungsmittel 50 als Schraubenaufnahme ausgebildet, die zur Herstellung einer Schraubverbindung zur Fixierung der Passagiersitzarmlehneneinheit 26 dient.

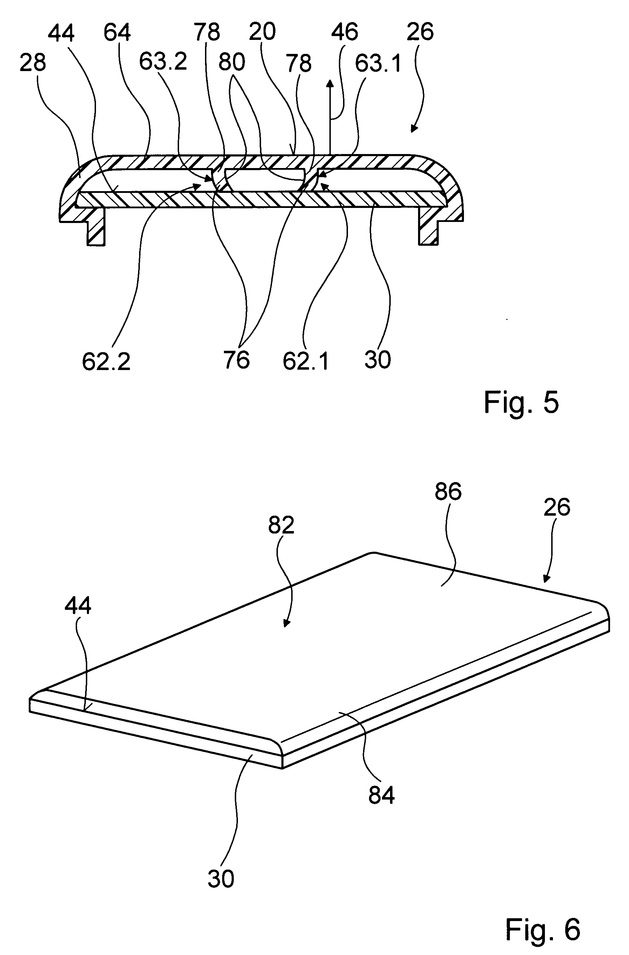

Wie in Figur 2 zu sehen ist, sind das Stützmittel 30 und der Armlehnengrundkörper 28 aneinander gehalten. Hierzu weist der Armlehnengrundkörper 28 Haltebereiche 52 auf, die dazu vorgesehen sind, eine Halteverbindung mit dem Stützmittel 30 herzustellen. Die Seitenbereiche 38 des Armlehnengrundkörpers 28, welche nach außen die Seitenfläche 40 bilden, weisen jeweils einen in Richtung 43 quer zur Längsrichtung 32 nach innen gerichteten Fortsatz 54 auf, der eine Stützfläche 56 bildet, auf welcher sich das Stützmittel 30 abstützt. Die Stützfläche 56 ist der Armlehnenfläche 20 zugewandt und parallel zu derselben ausgerichtet. Die die Stützfläche 56 bildenden Fortsätze 54 erstrecken sich zumindest über einen wesentlichen Teil der gesamten Erstreckung des Armlehnengrundkörpers 28 in dessen Längsrichtung 32 und sind hierbei jeweils als Haltelippe ausgebildet. Wie auch der Figur 5 zu entnehmen ist, ist das Stützmittel 30 vom Armlehnengrundkörper 28 von vier Seiten umschlossen. Das Stützmittel 30 und der Armlehnengrundkörper 28 sind aneinander angepasst ausgeformt, so dass das Stützmittel 30 und der Armlehnengrundkörper 28 formschlüssig aneinander gehalten sind.

Die Befestigungsmittel 50 dienen vorzugsweise ausschließlich zum Festhalten des Stützmittels 30 an der Armlehne 18. Bei einer Montage wird zunächst das Stützmittel 30 an der Armlehne 18 befestigt und anschließend wird der Armlehnengrundkörper 28 auf das Stützmittel 30 geschoben, wobei der Formschluss mittels der Haltebereiche 52 hergestellt wird. Hierdurch kann der Armlehnengrundkörper 28 einfach werkzeuglos am Stützmittel 30 befestigt werden. Außerdem kann der Armlehnengrundkörper 28 vom Stützmittel 30 einfach entfernt werden, wodurch ein einfacher Austausch des Armlehnengrundkörpers 28 durchgeführt werden kann.

Der Armlehnengrundkörper 28 ist aus einem harten Material hergestellt. Insbesondere ist er aus TPU hergestellt, welches Texin 285 und Polyurethan enthält, das eine Härte von ca. 85 Shore A und vorteilhafte Eigenschaften im Hinblick auf Verschleißfestigkeit aufweist. Um trotz der hohen Härte des Armlehnengrundkörpers 28 einen hohen Passagierkomfort zu bieten, ist die Passagiersitzarmlehneneinheit 26 mit einer Federungseinheit 58 versehen. Diese ist unterhalb der Armlehnenfläche 20 angeordnet. In dieser Beschreibung beziehen sich die Begriffe "oben", "unten", "oberhalb", "unterhalb" usw. unabhängig von der Stellung der Armlehne 18 bezüglich der Sitzfläche 14 auf die Normalrichtung 46 der Armlehnenfläche 20, wobei die Armlehnenfläche 20 der "oberen" Seite der Passagiersitzarmlehneneinheit 26 entspricht. Die Federungseinheit 58 ist von der Armlehnenfläche 20 von oben bedeckt und ist demnach für den Passagier nicht sichtbar.

Die Federungseinheit 58 weist zwei Federungsteile 62.1, 62.2 auf, die in Normalrichtung 46 zwischen der Armlehnenfläche 20 und dem Stützmittel 30 bzw. dessen Stützfläche 44 angeordnet sind. Die Federungsteile 62 sind länglich ausgebildet, mit einer Längsrichtung, die der Längsrichtung 32 entspricht. Sie erstrecken sich in Längsrichtung 32 über zumindest einen wesentlichen Teil der Erstreckung des Armlehnengrundkörpers 28 in dessen Längsrichtung 32 (siehe Figuren 3 und 4). Die Federungsteile 62.1, 62.2 sind zueinander parallel ausgerichtet und in Richtung 43 quer zur Längsrichtung 32 voneinander beabstandet.

Wie der Figur 2 zu entnehmen ist, dient das Stützmittel 30 zur Stützung der Federungseinheit 58 bzw. zur Stützung der Federungsteile 62.1, 62.2, die sich auf der Stützfläche 44 des Stützmittels 30 abstützen. Ein Federungsteil 62 verbindet hiermit einen Teilbereich 64 des Armlehnengrundkörpers 28 mit dem Stützmittel 30, wobei der Teilbereich 64 eine dem Stützmittel 30 zugewandte Bodenfläche 66 bildet. Hierbei dienen die am Teilbereich 64 fixierten Federungsteile 62.1, 62.2 als Abstandsmittel 68.1, 68.2, die, in der Normalrichtung 46 zur Armlehnenfläche 20, einen Abstand H zwischen dem Teilbereich 64 und dem Stützmittel 30 bilden.

Durch die Bildung des Abstands H entstehen durch die Federungseinheit 58 Hohlräume 70, 72.1, 72.2 innerhalb der Armlehnenstruktur zwischen dem Teilbereich 64 und dem Stützmittel 30. Hierdurch kann trotz der Härte des Materials des Armlehnengrundkörpers 28 eine für den Passagierkomfort vorteilhafte Nachgiebigkeit im Bereich der Armlehnenfläche 20 erreicht werden. Die Hohlräume 72 werden als seitliche Hohlräume 72.1, 72.2 bezeichnet. Die seitlichen Hohlräume 72.1, 72.2 sind voneinander getrennt bzw. sie sind in Richtung 43 quer zur Längsrichtung 32 voneinander beabstandet. Hierbei dienen die Federungsteile 62.1, 62.2 als Trennmittel 74.1, 74.2, die die Hohlräume 72.1, 72.2 in Richtung 43 voneinander trennen. Die seitlichen Hohlräume 72.1, 72.2 sind beidseitig der Mittelebene 34 angeordnet und von dieser in Richtung 43 beabstandet. Sie sind ferner bezüglich der Mittelebene 34 relativ zueinander spiegelsymmetrisch angeordnet und grenzen jeweils an einen Seitenbereich 38.1 bzw. 38.2 des Armlehnengrundkörpers 28 an. Diese jeweils einem Seitenbereich 38.1 bzw. 38.2 zugeordneten seitlichen Hohlräume 72.1, 72.2 bieten eine komfortable Dämpfung im Bereich der Seitenflächen 40 des Armlehnengrundkörpers 28. Zwischen den Federungsteilen 62.1, 62.2 bzw. den Trennmitteln 74.1, 74.2 ist ein weiterer, zentraler Hohlraum 70 angeordnet. Dieser ist von den seitlichen Hohlräumen 72.1, 72.2 jeweils durch eines der Trennmittel 74.1 bzw. 74.2 getrennt und bietet eine Dämpfung im Bereich der Mittelachse 36. Hierbei ist bezüglich der Richtung 43 der zentrale Hohlraum 70 zwischen den seitlichen Hohlräumen 72.1, 72.2 angeordnet.

Die Federungsteile 62.1, 62.2 weisen jeweils einen Bereich 63.1 bzw. 63.2 auf (siehe Figur 5), der als eine Rippe ausgebildet ist, die von dem Teilbereich 64 des Armlehnengrundkörpers 28 hervorstehen. Hierbei ragen die Bereiche 63 jeweils bis zum Kontakt mit dem Stützmittel 30 nach unten. Unter einer Erstreckung "nach unten" soll insbesondere eine Erstreckung in einer Richtung verstanden werden, die von der Armlehnenfläche 20 wegführt und in Richtung des Stützmittels 30 zeigt. Die als Rippen ausgebildeten Bereiche 63.1, 63.2 sind in der Längsrichtung 32 zueinander parallel ausgerichtet. Im betrachteten Ausführungsbeispiel sind die Federungsteile 62.1, 62.2 an den Armlehnengrundkörper 28 einstückig angeformt.

Die Federungsteile 62.1, 62.2 sind in einer Detailansicht in Figur 5 näher dargestellt. Diese zeigt die Anordnung aus Figur 2 in einer zweidimensionalen Schnittansicht entlang einer senkrecht zur Längsrichtung 32 ausgerichteten Ebene. Wie der Darstellung zu entnehmen ist, weist ein Bereich 63.1 bzw. 63.2 jeweils einen Teilbereich 76 auf, welcher relativ zur Stützfläche 44 des Stützmittels 30 schräg ausgerichtet ist. In einem Schnitt in einer zur Mittelachse 36 senkrechten Ebene, wie in der Figur 5 dargestellt, bildet der schräge Teilbereich 76 einen Winkel mit der Stützfläche 44 sowie mit der Normalrichtung 46. Der Teilbereich 76 grenzt direkt an die Stützfläche 44 und greift schräg an diese an. Der Teilbereich 76 kann dem gesamten Bereich 63.1, 63.2 entsprechen, wobei der gesamte Bereich 63.1, 63.2 relativ zur Stützfläche 44 schräg ausgerichtet ist oder, wie im betrachteten Ausführungsbeispiel, der schräge Teilbereich 76 sich an einen senkrecht zur Armlehnenfläche 20 ausgerichteten, an den Teilbereich 64 angrenzenden Teilbereich 78 anschließen kann. Hierdurch wird an einer Winkelstelle, an der der senkrechte Teilbereich 78 in den schrägen Teilbereich 76 übergeht, eine Soll-Biegestelle 80 gebildet.

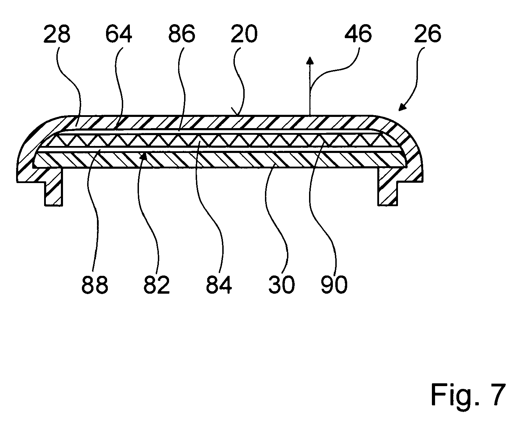

Die Figuren 6 und 7 zeigen die Passagiersitzarmlehneneinheit 26 in einer alternativen Ausführung. Die folgende Beschreibung beschränkt sich, um unnötige Wiederholungen zu vermeiden, auf die Unterschiede zum oben beschriebenen Ausführungsbeispiel. Bauteile, die eine gleiche Funktion wie im ersten Ausführungsbeispiel aufweisen, werden mit dem gleichen Bezugszeichen bezeichnet. Zu Merkmalen, die unten nicht beschrieben sind, wird auf die obige Beschreibung verwiesen.

Figur 6 zeigt die Passagiersitzarmlehneneinheit 26 in einer perspektivischen Ansicht, wobei der Klarheit halber auf die Darstellung des Armlehnengrundkörpers 28, der identisch zum Ausführungsbeispiel in den Figuren 1 bis 5 ist, verzichtet wird. Auf der Stützfläche 44 des Stützmittels 30 ist eine Federungseinheit 82 aufgebracht. Diese erstreckt sich über einen wesentlichen Teil der Stützfläche 44. Insbesondere ist die Stützfläche 44 von der Federungseinheit 82 von oben bedeckt.

In der Figur 7 ist die Passagiersitzarmlehneneinheit 26 in einer zweidimensionalen Schnittdarstellung entlang einer senkrecht zur Längsrichtung 32 ausgerichteten Ebene gezeigt. Die Federungseinheit 82 weist ein Federmittel 84 auf, das aus einem Stoff hergestellt ist und in einem vom Teilbereich 64 und der Stützfläche 44 gebildeten Raum angeordnet ist. Hierbei stützt sich das Federmittel 84 an der Stützfläche 44 des Stützmittels 30 ab und grenzt an den Teilbereich 64 des Armlehnengrundkörpers 28 an. Das Federmittel 84 ist als Abstandsgewirke ausgebildet. Dieses entspricht einem doppelflächigen Textil mit zwei zueinander parallelen Textilflächen, wobei eine Textilfläche 86 an den Teilbereich 64 und eine Textilfläche 88 an die Stützfläche 44 angrenzt. Die Textilflächen 86, 88 sind voneinander über Abstandsmittel 90 voneinander beabstandet. Die Abstandsmittel 90 entsprechen abstandshaltenden Verbindungsfäden, auch Polfäden genannt, die in der Figur schematisch und der Klarheit halber vergrößert dargestellt sind. Durch den Einsatz eines Abstandsgewirkes ist eine hohe Anzahl an diskreten, voneinander unterscheidbaren Abstandsmitteln gegeben, die sich in diskreten Stützbereichen der Textilflächen 86, 88 abstützen.

**Bezugszeichen**

| | | | |
|---|---|---|---|
| 10 | Passagiersitz | 52 | Haltebereich |
| 12 | Sitzteil | 54 | Fortsatz |
| 14 | Sitzfläche | 56 | Stützfläche |
| 16 | Rückenlehne | 58 | Federungseinheit |
| 18 | Armlehne | 62 | Federungsteil |
| 20 | Armlehnenfläche | 63 | Bereich |
| 22 | Schalenkörper | 64 | Teilbereich |
| 24 | Bodenseite | 66 | Bodenfläche |
| 26 | Passagiersitzarmlehneneinheit | 68 | Abstandsmittel |
| 28 | Armlehnengrundkörper | 70 | Hohlraum |
| 30 | Stützmittel | 72 | Hohlraum |
| 32 | Längsrichtung | 74 | Trennmittel |
| 34 | Mittelebene | 76 | Teilbereich |
| 36 | Mittelachse | 78 | Teilbereich |
| 38 | Seitenbereich | 80 | Biegestelle |
| 40 | Seitenfläche | 82 | Federungseinheit |
| 42 | Kantenbereich | 84 | Federmittel |
| 43 | Richtung | 86 | Textilfläche |
| 44 | Stützfläche | 88 | Textilfläche |
| 46 | Normalrichtung | 90 | Abstandsmittel |
| 48 | Bodenfläche | H | Abstand |
| 50 | Befestigungsmittel | | |

## Patentansprüche

1. Passagiersitzarmlehneneinheit mit einem Armlehnengrundkörper (28), der eine Armlehnenfläche (20) bildet, und mit einer unterhalb der Armlehnenfläche (20) angeordneten Federungseinheit (58; 82), die zumindest ein Abstandsmittel (68.1, 68.2; 90) aufweist, und mit einem Stützmittel (30) zur Stützung der Federungseinheit (58), wobei durch die Federungseinheit (58) zumindest ein Hohlraum (70, 72.1, 72.2) zwischen zumindest einem Teilbereich (64) des Armlehnengrundkörpers (28) und dem Stützmittel (30) gebildet ist, wobei der Armlehnengrundkörper (28) länglich mit einer Längsrichtung (32) ausgebildet ist und eine sich in Längsrichtung (32) erstreckende Mittelebene (34) aufweist, wobei der Hohlraum (72.1, 72.2) seitlich der Mittelebene (34) und von der Mittelebene (34) beabstandet angeordnet ist, **dadurch gekennzeichnet, dass** die Federungseinheit (58) zwei Federungsteile (62.1, 62.2) aufweist, die in Normalrichtung (46) zwischen der Armlehnenfläche (20) und einer Stützfläche (44) des Stützmittels (30) angeordnet sind und jeweils einen Bereich (63.1, 63.2) aufweisen, wobei die Bereiche (63.1, 63.2) jeweils einen Teilbereich (76) aufweisen, welcher relativ zur Stützfläche (44) des Stützmittels (30) schräg ausgerichtet ist.

2. Passagiersitzarmlehneneinheit nach Anspruch 1, **gekennzeichnet durch** ein Stützmittel (30) zur Stützung der Federungseinheit (58), wobei das Abstandsmittel (68.1, 68.2) in Normalrichtung (46) der Armlehnenfläche (20) einen Abstand (H) zwischen dem Stützmittel (30) und zumindest einem Teilbereich (64) des Armlehnengrundkörpers (28) bildet.

3. Passagiersitzarmlehneneinheit nach Anspruch 1, **dadurch gekennzeichnet, dass** die Federungseinheit (58) zumindest zwei Hohlräume (70, 72.2, 72.2) bildet und ein Trennmittel (74.1, 74.2) aufweist, das die Hohlräume (70, 72.2, 72.2) voneinander trennt.

4. Passagiersitzarmlehneneinheit nach einem der Ansprüche 2 bis 3, **dadurch gekennzeichnet, dass** der Armlehnengrundkörper (28) das Stützmittel (30) zumindest im Wesentlichen umschließt.

5. Passagiersitzarmlehneneinheit nach einem der Ansprüche 2 bis 4, **dadurch gekennzeichnet, dass** der Armlehnengrundkörper (28) zumindest einen Haltebereich (52) aufweist, der zur Herstellung einer Halteverbindung mit dem Stützmittel (30) vorgesehen ist.

6. Passagiersitzarmlehneneinheit nach Anspruch 5, **dadurch gekennzeichnet, dass** der Haltebereich (52) zur Herstellung eines Formschlusses mit dem Stützmittel (30) vorgesehen ist.

7. Passagiersitzarmlehneneinheit nach einem der vorhergehenden Ansprüche, **dadurch gekennzeichnet, dass** der Armlehnengrundkörper (28) länglich mit einer Längsrichtung (32) ausgebildet ist und die Federungseinheit (58) ein Federungsteil (62.1, 62.2) umfasst, das in der Längsrichtung (32) eine Erstreckung aufweist, die zumindest einen wesentlichen Teil der Erstreckung des Armlehnengrundkörpers (28) in Längsrichtung (32) beträgt.

8. Passagiersitzarmlehneneinheit nach einem der vorhergehenden Ansprüche, **dadurch gekennzeichnet, dass** die Federungseinheit (58) zumindest ein Federungsteil (62.1, 62.2) aufweist, das an den Armlehnengrundkörper (28) einstückig angeformt ist.

9. Passagiersitzarmlehneneinheit nach einem der vorhergehenden Ansprüche, **dadurch gekennzeichnet, dass** die Federungseinheit (58) zumindest ein Federungsteil (62.1, 62.2) aufweist, das einen von zumindest einem Teilbereich (64) des Armlehnengrundkörpers (28) hervorstehenden Bereich (63.1, 63.2) aufweist.

10. Passagiersitzarmlehneneinheit nach einem der vorhergehenden Ansprüche, **dadurch gekennzeichnet, dass** die Federungseinheit (82) ein Federmittel (84) aufweist, das zumindest aus Stoff hergestellt ist.

11. Passagiersitzarmlehneneinheit nach Anspruch 10, **dadurch gekennzeichnet, dass** das Federmittel (84) als Abstandsgewirke ausgebildet ist.

12. Passagiersitzarmlehneneinheit nach einem der vorhergehenden Ansprüche, **dadurch gekennzeichnet, dass** der Armlehnengrundkörper (28) aus einem harten Material hergestellt ist.

## Claims

1. Armrest unit for a passenger seat, with an armrest base body (28) forming an armrest surface (20) and with a suspension unit (58; 82) that is arranged below the armrest surface (20) and comprises at least one spacing means (68.1, 68.2; 90) and with a supporting means (30) for supporting the suspension unit (58), wherein at least one hollow space (70, 72.1, 72.2) is formed between at least one partial region (64) of the armrest base body (28) and the supporting means (30) by the suspension unit (58), wherein the armrest base body (28) is embodied elongate with a longitudinal direction (32) and has a central plane (34) extending in the longitudinal direction (32), wherein the hollow space (70, 72.1, 72.2) is arranged to the side of the central plane (34) and spaced apart from the central plane (34), **characterised in that** the suspension unit (58) comprises two suspension parts (62.1, 62.2), which are arranged between the armrest surface (20) and a supporting surface (44) of the supporting means (30) in a normal direction (46), each comprising a region (63.1, 63.2), the regions (63.1, 63.2) each comprising a partial region (76) which is oriented inclined with respect to the supporting surface (44) of the supporting means (30).

2. Armrest unit for a passenger seat according to claim 1, **characterised by** a supporting means (30) for supporting the suspension unit (58), the spacing means (68.1, 68.2) implementing a spacing (H) between the supporting means (30) and at least a partial region (64) of the armrest base body (28) in the normal direction (46) of the armrest surface (20).

3. Armrest unit for a passenger seat according to claim 1, **characterised in that** the suspension unit (58) forms at least two hollow spaces (70, 71.2, 72.2) and comprises a separation means (74.1, 74.2) separating the hollow spaces (70, 71.2, 72.2) from each other.

4. Armrest unit for a passenger seat according to one of claims 2 to 3, **characterised in that** the armrest base body (28) at least substantially encompasses the supporting means (30).

5. Armrest unit for a passenger seat according to one of claims 2 to 4, **characterised in that** the armrest base body (28) comprises at least one retaining zone (52) which is provided for establishing a retaining connection with the supporting means (30).

6. Armrest unit for a passenger seat according to claim 5, **characterised in that** the retaining zone (52) is provided for establishing a form-fit connection with the supporting means (30).

7. Armrest unit for a passenger seat according to one of the preceding claims, **characterised in that** the armrest base body (28) is embodied elongate with a longitudinal direction (32), and the suspension unit (58) comprises a suspension part (62.1, 62.2) which has in the longitudinal direction (32) an extension amounting to at least a substantial portion of the extension of the armrest base body (28) in the longitudinal direction (32).

8. Armrest unit for a passenger seat according to one of the preceding claims, **characterised in that** the suspension unit (58) comprises at least one suspension part (62.1, 62.2) which is moulded to the armrest base body (28) in a onepart implementation.

9. Armrest unit for a passenger seat according to one of the preceding claims, **characterised in that** the suspension unit (58) comprises at least one suspension part (62.1, 62.2) having a region that protrudes at least from a partial region (64) of the armrest base body (28).

10. Armrest unit for a passenger seat according to one of the preceding claims, **characterised in that** the suspension unit (82) comprises a resilient means (84) which is produced at least of fabric.

11. Armrest unit for a passenger seat according to claim 10, **characterised in that** the resilient means (84) is embodied as a spacer fabric.

12. Armrest unit for a passenger seat according to one of the preceding claims, **characterised in that** the armrest base body (28) is produced of a hard material.

## Revendications

1. Unité d'accoudoir de siège de passager avec un corps de base d'accoudoir (28) formant une surface d'accoudoir (20) et avec une unité de suspension (58 ; 82) disposée au-dessous de la surface d'accoudoir (20) et, comprenant au moins un moyen d'écart (68.1, 68.2 ; 90), et avec un moyen à support (30) pour supporter l'unité de suspension (58), au moins un espace creux (70, 72.1, 72.2) étant formé par l'unité de suspension (58) entre au moins une zone partielle (64) du corps de base d'accoudoir (28) et le moyen à support (30), le corps de base d'accoudoir (28) étant implémenté oblong, avec une direction longitudinale (32) et comprenant un plan central (34) s'étendant dans la direction longitudinale (32), l'espace creux (72.1, 72.2) étant disposé à côté du plan central (34) et écarté du plan central (34), **caractérisée en ce que** l'unité de suspension (58) comporte deux éléments de suspension (62.1, 62.2), lesquels sont disposés entre la surface d'accoudoir (20) et une surface de support (44) du moyen à support (30) dans une direction normale (46), chacun comprenant une région (63.1, 63.2), chacune des régions (63.1, 63.2) comprenant une région partielle (76), laquelle est orientée obliquement relatif à la surface de support (44) du moyen à support (30).

2. Unité d'accoudoir de siège de passager selon la revendication 1, **caractérisée par** un moyen à support (30) pour supporter l'unité de suspension (58), le moyen d'écart (68.1, 68.2) formant un écart (H) entre le moyen de support (30) et au moins une zone partielle (64) du corps de base d'accoudoir (28) dans la direction normale (46) de la surface d'accoudoir (20).

3. Unité d'accoudoir de siège de passager selon la revendication 1, **caractérisée en ce que** l'unité de suspension (58) forme au moins deux espaces creux (70, 71.1, 72.2) et comporte un moyen à cloison (74.1, 74.2) séparant les espaces creux (70, 71.1, 72.2) l'un de l'autre.

4. Unité d'accoudoir de siège de passager selon une des revendications 2 à 3, **caractérisée en ce que** le corps de base d'accoudoir (28) entoure le moyen de support (30) au moins substantiellement.

5. Unité d'accoudoir de siège de passager selon une des revendications 2 à 4, **caractérisée en ce que** le corps de base d'accoudoir (28) comporte au moins une zone de rétention (52) prévue pour implémenter une connexion retenant avec le moyen de support (30).

6. Unité d'accoudoir de siège de passager selon la revendication 5, **caractérisée en ce que** la zone de rétention (52) est prévue pour implémenter une fixation par forme avec le moyen de support (30).

7. Unité d'accoudoir de siège de passager selon une des revendications précédentes, **caractérisée en ce que** le corps de base d'accoudoir (28) est implémenté oblong avec une direction longitudinale (32) et l'unité de suspension (58) comprend un élément de suspension (62.1, 62.2) ayant dans la direction longitudinale (32) une extension, laquelle est d'au moins une part substantielle de l'extension du corps de base d'accoudoir (28) dans la direction longitudinale (32).

8. Unité d'accoudoir de siège de passager selon une des revendications précédentes, **caractérisée en ce que** l'unité de suspension (58) comporte au moins un élément de suspension (62.1, 62.2) moulé au corps de base d'accoudoir (28) intégralement.

9. Unité d'accoudoir de siège de passager selon une des revendications précédentes, **caractérisée en ce que** l'unité de suspension (58) comporte au moins un élément de suspension (62.1, 62.2) comprenant une région (63.1, 63.2) projetant d'au moins une zone partielle (64) du corps de base d'accoudoir (28).

10. Unité d'accoudoir de siège de passager selon une des revendications précédentes, **caractérisée en ce que** l'unité de suspension (82) comporte un moyen de ressort (84) produit au moins en tissu.

11. Unité d'accoudoir de siège de passager selon la revendication 10, **caractérisée en ce que** le moyen de ressort (84) est implémenté comme tricot d'écart.

12. Unité d'accoudoir de siège de passager selon une des revendications précédentes, **caractérisée en ce que** le corps de base d'accoudoir (28) est produit d'un matériau dur.
